# EUROPEAN PATENT SPECIFICATION

(11) **EP 0 714 508 B1**
(45) Date of publication and mention of the grant of the patent: **12.03.2003**
(21) Application number: 94924317.4
(22) Date of filing: 17.08.1994
(51) Int. Cl.: G01N 27/30

(54) **REFERENCE ELECTRODE**
REFERENZELEKTRODE
ELECTRODE DE REFERENCE

(30) Priority: 18.08.1993 FI 933644
(43) Date of publication of application: 05.06.1996
(73) Proprietor: VALTION TEKNILLINEN TUTKIMUSKESKUS, 02150 Espoo 15 (FI)
(72) Inventor: SELIN, Lauri, FIN-02150 Espoo (FI); MÄKELÄ, Kari, FIN-02150 Espoo (FI); AALTONEN, Pertti, FIN-02150 Espoo (FI)
(74) Representative: Helino, Timo Kalervo
(86) International application number: FI9400355
(87) International publication number: WO95005597

(56) References cited:
- EP-A- 0 400 813
- WO-A-89/02592
- US-A- 4 636 292
- ORBIT SEARCH SERVICE, file WPAT, Accession number 91-152602/21 ((HITA) HITACHI KK); & JP,A,3 087 643, 12 April 1991.
- PATENT ABSTRACTS OF JAPAN, Vol. 13, No. 387, P-924; & JP,A,1 136 060 (TERUMO CORP), 29 May 1989 (29.05.89).

## Description

The present invention concerns a reference electrode as defined in the preamble to Claim 1.

Reference electrodes are used, for instance, in various electro-chemical measurements in aqueous solutions. The circumstances of measurement are often inconvenient owing to high temperatures and high pressures. A reference electrode for use in such conditions traditionally consists of a silver wire and an insulator thereupon, the latter usually being of some appropriate plastic material. However, problems are caused in connection with an electrode of this kind by the temperature resistance of the insulator and by the sealing of the electrode when it is being carried through into the pressurized space, because the elastic insulating layer surrounding the silver wire is subjected to comparatively high pressure when the sealing is made.

Owing to the problems just reviewed, accomplishment of electro-chemical measurements in aqueous solutions has been cumbersome at temperatures upwards of 300°C, although temperatures in various applications may vary up to the critical point of water, which is about 370°C.

The object of the invention is to eliminate the drawbacks mentioned. The object of the invention is specifically to disclose a novel reference electrode which is simple and easy to manufacture and of which the sealing against a pressurized space is easy to implement.

Regarding the features characterizing the invention, reference is made to the Claims section.

The reference electrode of the invention for use in electro-chemical measurements made in aqueous solutions under high pressures and at high temperatures comprises a metallic conductor wire, on the surface of the conductor wire an insulating layer of its own oxide, an area on the surface of the wire free of insulating layer and a metal/salt coating covering said area and which serves as an electro-chemical element determining the potential.

It is thus essential in the reference electrode of the invention that in it such a metallic conductor material is used which forms on its surface, or on the surface of which can be formed, a chemically stable oxidized layer serving as electrical insulator.

Advantageously, the reference electrode of the invention comprises a metallic zirconium wire upon which, or on the surface of which, a zirconium oxide layer has been oxidized. Zirconium oxide ZrO₂ is a good insulator and thereby forms an adequate insulator on the surface of the zirconium wire between the surrounding aqueous solution and the wire. In addition there is in the reference electrode on the surface of the wire an area free of the zirconium oxide layer, and this free area has been covered or coated with a mixture of silver Ag and silver chloride AgCl, which serves in the electrode as an electro-chemical element determining the potential.

Other electro-chemical reference couples constituted by a solid metal salt and an electrolyte may equally be used in addition to the silver/silver chloride (Ag/AgCl) reference couple. such as e.g. a mercury/mercury chloride (Hg/Hg₂Cl₂) couple.

When making a reference electrode according to the invention, it is advantageous first to oxidize the entire surface of the conductor wire to carry a corresponding oxide layer, whereafter an aperture is made in the oxide layer, i.e., oxide is removed therefrom on a given area so that the metallic conductor wire is exposed. The metallic conductor wire is then coated, or covered, e.g. with a mixture of silver and silver chloride. This covering is advantageously accomplished by dipping the area to be covered in molten silver chloride containing silver in the form of small particles.

Advantageously, the area to be covered is a cylindrical area of the wire's mantle, extending around the conductor wire.

The mixture covering the oxide aperture is advantageously prepared in that the silver chloride is heated to about 400°C, at which temperature it melts, and silver is added to this in the form of small, fine particles, whereafter the conductor wire, at least its part containing the oxide aperture, is dipped in this molten mixture.

The reference electrode of the invention enables electro-chemical measurements at any temperature and pressure up to the critical point of water, and its sealing to a pressurized shell is easy because it has no separate, yielding insulating layer, instead of which it has an oxide layer on the outer surface of the metallic conductor wire, which renders good sealing possible.

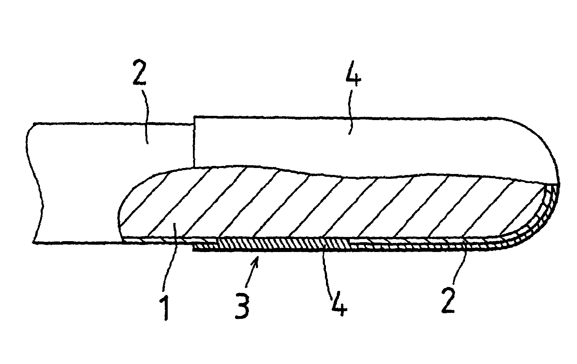

In the following the invention is described with the aid of the attached drawing, wherein schematically has been depicted a reference electrode according to the invention, or more accurately, the tip design of the reference electrode.

The reference electrode depicted in the drawing comprises a conductor wire 1, consisting of metallic zirconium. Around this is provided a mantle 2 of zirconium oxide ZrO₂ encircling it substantially on all sides, which has, for instance, been grown by oxidation around the wire to form a continuous insulator shell.

The zirconium oxide mantle serving as insulator has been removed from around the zirconium wire on a certain annular area 3, which extends as a cylindrical shell over the whole circumference of the zirconium wire at a distance from the end of the wire.

Thereafter, the end of the zirconium wire, including the area free of zirconium oxide, has in its entirety and to a certain distance onward from the free area been covered with a mixture 4 of silver and silver chloride in such manner that the metallic zirconium 1 is not in direct connection, or contact, with the space outside the reference electrode. In this way the Ag/AgCl coating will serve as an electro-chemical element determining the potential of the reference electrode.

## Claims

1. A reference electrode for electro-chemical measurements made in aqueous solutions under high pressures and at high temperatures, **characterized in that** the reference electrode comprises
- a metallic conductor wire (1),
- on the surface of said conductor wire, an insulating layer (2) of its own oxide,
- on the surface of the wire, an area (3) free of insulating layer, and
- a metal/salt coating (4) covering the area (3), serving as an electro-chemical element determining the potential.

2. Reference electrode according to claim 1, **characterized in that** the conductor wire is a zirconium wire Zr (1) and on the surface of the wire as insulator is provided a zirconium oxide layer ZrO₂ (2), e.g. grown by oxidation.

3. Reference electrode according to claim 1, **characterized in that** the metal/salt coating consists of Ag/AgCl mixture.

4. Reference electrode according to claim 3, **characterized in that** the area (3) has been coated by dipping it in molten AgCl which contains silver in the form of small particles.

5. Reference electrode according to claim 1, **characterized in that** the area (3) extends on the conductor wire over its entire circumference.

6. Reference electrode according to any one of claims 1-5, **characterized in that** the free area (3) is produced by removing the oxide layer from the area.

7. Reference electrode according to any one of claims 3-6, **characterized in that** the Ag/AgCl mixture is heated to about 400°C, whereupon the area (3) is dipped in it.

8. Use of a reference electrode according to any one of claims 1-7 at all and any temperatures and pressures up to the critical point of water at about 370°C.

## Patentansprüche

1. Bezugselektrode für elektrochemische Messungen in wässrigen Lösungen und unter hohen Drücken und bei hohen Temperaturen, **dadurch gekennzeichnet, daß** die Referenzelektrode umfasst :
- einen metallischen Leitungsdraht (1),
- auf der Oberfläche des Leitungsdrahtes, eine isolierende Schicht (2) seines eigenen Oxids,
- auf der Oberfläche des Drahtes, eine Fläche (3) frei von isolierender Schicht, und
- einer die Fläche (3) bedeckenden Metall/Salz-Beschichtung (4), die als elektrochemisches, das Potential bestimmendes Element dient.

2. Bezugselektrode nach Anspruch 1, **dadurch gekennzeichnet, daß** der Leitungsdraht ein Zirkondraht Zr (1) ist, und auf der Oberfläche des Drahtes als Isolator eine zum Beispiel durch Oxidation gewachsene Zirkonoxidschicht ZrO₂ (2) vorgesehen ist.

3. Bezugselektrode nach Anspruch 1, **dadurch gekennzeichnet, daß** die Metall/Salz-Beschichtung aus einer Ag/AgCl-Mischung besteht.

4. Bezugselektrode nach Anspruch 3, **dadurch gekennzeichnet, daß** die Fläche (3) durch Eintauchen in geschmolzenes AgCl beschichtet wurde, welches Silber in Form von kleinen Partikeln enthält.

5. Bezugselektrode nach Anspruch 1, **dadurch gekennzeichnet, daß** die Fläche (3) auf dem Leitungsdraht sich über seinen gesamten Umfang erstreckt.

6. Bezugselektrode nach einem der Ansprüche 1 bis 5, **dadurch gekennzeichnet, daß** die freie Fläche (3) durch Entfernen der Oxidschicht von dieser Fläche erzeugt ist.

7. Bezugselektrode nach einem der Ansprüche 3 bis 6, **dadurch gekennzeichnet, daß** die Ag/AgCl-Mischung auf ca. 400°C erhitzt wurde, woraufhin die Fläche (3) in sie eingetaucht wird.

8. Verwendung einer Elektrode nach einem der Ansprüche 1 bis 7 bei allen und jeden Temperaturen und Drücken bis zum kritischen Punkt von Wasser bei ungefähr 370° C.

## Revendications

1. Une électrode de référence, pour effectuer des mesures électrochimiques dans des solutions aqueuses, sous des pressions élevées et à de hautes températures, **caractérisée en ce que** l'électrode de référence comprend :
un fil conducteur métallique (1),
sur la surface dudit fil conducteur, une couche isolante (2) de son oxyde propre,
sur la surface du fil, une aire (3) exempte de couche isolante, et
un revêtement métallique-salin (4) couvant l'aire (3), servant d'élément électrochimique déterminant le potentiel.

2. Electrode de référence selon la revendication 1, **caractérisée en ce que** le fil conducteur est un fil de zirconium Zr(1) et, sur la surface du fil, à titre d'isolant, est prévue une couche d'oxyde de zirconium ZrO₂ (2), par exemple ayant crû sous l'effet de l'oxydation.

3. Electrode de référence selon la revendication 1, **caractérisée en ce que** le revêtement métallique-salin est formé d'un mélange Ag/AgCl.

4. Electrode de référence selon la revendication 3, **caractérisée en ce que** l'aire (3) a été revêtue par immersion de celle-ci dans du AgCl fondu contenant de l'argent sous la forme de petites particules.

5. Electrode de référence selon la revendication 1, **caractérisée en ce que** l'aire (3) s'étend sur le fil conducteur, sur la totalité de sa circonférence.

6. Electrode de référence selon l'une quelconque des revendications 1 à 5, **caractérisée en ce que** l'aire (3) libre est produite par enlèvement de la couche d'oxyde depuis l'aire.

7. Electrode de référence selon l'une quelconque des revendications 3 à 6, **caractérisée en ce que** le mélange Ag/AgCl est chauffé à environnement 400°C, suite à quoi l'aire (3) est immergée dans ce mélange.

8. Utilisation d'une électrode de référence selon l'une quelconque des revendications 1 à 7, à toute températures et pressions allant jusqu'au point critique de l'eau, à environ 370°C.
